**Europäisches Patentamt**

**European Patent Office**

**Office européen des brevets**

(19)

(11) Veröffentlichungsnummer: **0 095 688**
**B1**

(12) # EUROPÄISCHE PATENTSCHRIFT

(45) Veröffentlichungstag der Patentschrift:
24.09.86

(21) Anmeldenummer: 83105054.7

(22) Anmeldetag: 21.05.83

(51) Int. Cl.⁴: **A 01 F 15/00**

(54) Rundballenpresse mit einem einen Guteinlass aufweisenden Ballenpressraum.

(30) Priorität: 28.05.82 US 382885
28.05.82 US 382886
28.05.82 US 382882

(43) Veröffentlichungstag der Anmeldung:
07.12.83 Patentblatt 83/49

(45) Bekanntmachung des Hinweises auf die Patenterteilung:
24.09.86 Patentblatt 86/39

(84) Benannte Vertragsstaaten:
DE FR GB IT SE

(56) Entgegenhaltungen:
US-A-4 143 505
US-A-4 266 390

Bamford BL131 Round Baler, List No. 3545/1977

(73) Patentinhaber: **DEERE & COMPANY, 1 John Deere Road, Moline Illinois 61265 (US)**

(72) Erfinder: **Soteropulos, Gust Steve, 345 E. Alta Vista, Ottumwa Iowa 52501 (US)**
Erfinder: **Anstey, Henry Dennis, Rural Route 4 Box 188a, Ottumwa Iowa 52501 (US)**
Erfinder: **Meiers, Gerald Franklyn, 1014 Chester, Ottumwa Iowa 52501 (US)**

(74) Vertreter: **Feldmann, Bernhard, DEERE & COMPANY European Office, Patent Department Steubenstrasse 36- 42 Postfach 503, D-6800 Mannheim 1 (DE)**

EP 0 095 688 B1

LIBER, STOCKHOLM 1986

## Beschreibung

Die Erfindung betrifft eine Rundballenpresse mit einem einen Guteinlaß aufweisenden Ballenpreßraum und einem dem Ballenpreßraum benachbarten Raum, wobei beide Räume aus umlaufenden, über Walzen geführten, sich bis in den Bereich von Seitenwänden erstreckenden endlosen Riemen gebildet werden.

Das Heranführen der Riemen bei dieser Rundballenpresse (BAMFORD BL 191 Round Baler, List No. 3545/1977) bis in den Bereich der Seitenwände kann bei losem, brüchigem Erntegut zu Materialansammlungen in den dem Ballenpreßraum benachbarten Räumen führen, da das Erntegut, bedingt durch das anfängliche Herumwirbeln in dem Ballenpreßraum, bevor es zu einem festen Ballen gepreßt wird, zwischen den Riemen hindurchfällt und in den dem Ballenpreßraum benachbarten Räumen verharrt. Das in diesen Räumen sich sammelnde Erntegut kann die Walzen umwickeln, den Riemenlauf negativ beeinflussen und sich schließlich so aufstauen, daß die Funktion der Rundballenpresse nicht mehr gewährleistet ist.

Die mit der Erfindung zu lösende Aufgabe wird darin gesehen, eine Reinigungsmöglichkeit für mindestens einen dem Ballenpreßraum benachbarten Raum zu schaffen.

Erfindungsgemäß ist diese Aufgabe dadurch gelöst worden, daß der benachbarte Raum mit Bezug auf die Fahrtrichtung mindestens eine zum selbsttätigen Austreten des Erntegutes seitliche Öffnung aufweist.

Auf diese Weise kann das Erntegut durch die schwingende Bewegung der Riemen seitwärts ausgeworfen oder von einer Bedienungsperson zu Wartungszwecken entfernt werden.

Um eventuellen Unfallgefahren entgegenzuwirken, ist es wünschenswert, die Öffnung(en) nur so groß auszubilden, als es zum selbständigen Austritt des Erntegutes erforderlich ist. Zu große Öffnungen könnten Bedienende oder Kinder veranlassen, verbotswidrig in die Räume einzusteigen.

Auf sehr einfache Weise kann eine derartige Öffnung dadurch erreicht werden, daß mindestens eine der dem weiteren Raum zugeordneten Walzen derart angeordnet ist, daß sie sich mindestens teilweise außerhalb des von den Seitenwänden umschlossenen Raumes befindet.

Da das sich ansammelnde Erntegut in den Räumen durch die Schwerkraftwirkung stets nach unten fällt, wird eine sehr gute selbsttätige Reinigungswirkung dadurch erzielt, daß die dem weiteren Raum zugehörige Walze mit Bezug auf die Bodenoberfläche die am tiefsten gelegene Walze ist.

Die Anordnung der Laufräder seitlich von den Öffnungen mit einem gewissen Abstand gewährt einen freien Austritt des Erntegutes durch die Öffnungen, verhindert aber gleichzeitig, daß von seitlich der Laufräder gelegenen Schwaden Erntegut von den umlaufenden Riemen in die Räume eingezogen werden kann und daß im Arbeitsbereich der Rundballenpresse sich aufhaltende Personen die umlaufenden Riemen nicht berühren können.

Die nahezu vollständige Überdeckung des Abstandes zwischen den Seitenwänden in Verbindung mit den Öffnungen, die sich durch die teilweise außerhalb der Seitenwände verlaufenden Riemen ergeben, führt zu einem hohen Grad an Funktionstüchtigkeit der Rundballenpresse, da nur ganz wenig Erntegut in die dem Ballenpreßraum benachbarten Räume eindringen und ohne Probleme durch die Öffnungen austreten kann.

Da sich der größte der dem Ballenpreßraum benachbarten Räume im rückwärtigen Bereich der Rundballenpresse befindet und dort zwangsläufig die größte Gefahr von Ernteguteinschlüssen gegeben ist, ist es bei einer Rundballenpresse mit vertikal schwenkbar angeordneten, rückwärtigen Teilen von großem Nutzen, wenn diese so ausgebildet ist, daß sich die dem weiteren Raum zugehörige Walze zwischen effekt besonders stark ist, wenn die dem weiteren Raum zugehörige Walze nahe der vorderen unteren Kante der rückwärtigen Teile vorgesehen ist und wenn eine weitere dem benachbarten Raum zugehörige Walze nahe der rückwärtigen unteren Kante der rückwärtigen Teile vorgesehen ist.

Eine sehr kompakte Bauweise wird bei einer Rundballenpresse mit rückwärtigen und vorderen Riementeilstücken, zwischen denen ein Ballen gebildet wird, dadurch erzielt, daß die der vorderen unteren Kante der rückwärtigen Teile naheliegende dem weiteren Raum zugeordnete Walze das untere Ende des rückwärtigen Riementeilstücks bildet.

In den Zeichnungen ist ein nachfolgend näher beschriebenes Ausführungsbeispiel einer Rundballenpresse mit den Merkmalen der Erfindung dargestellt. Es zeigt:

Fig. 1 eine Ansicht der rechten Seite der Rundballenpresse

Fig. 2 eine ähnliche Ansicht wie Fig. 1 mit offenem Ballenpreßraum und einem Ballen im Anfang seiner Wickelphase

Fig. 3 eine Teilansicht eines oberen Vorderteils der Rundballenpresse von Fig. 1

Fig. 4 eine Teilansicht eines unteren Vorderteils der Rundballenpresse von Fig. 1

Fig. 5 einen Schnitt nach der Linie 5 - 5 in Fig. 4

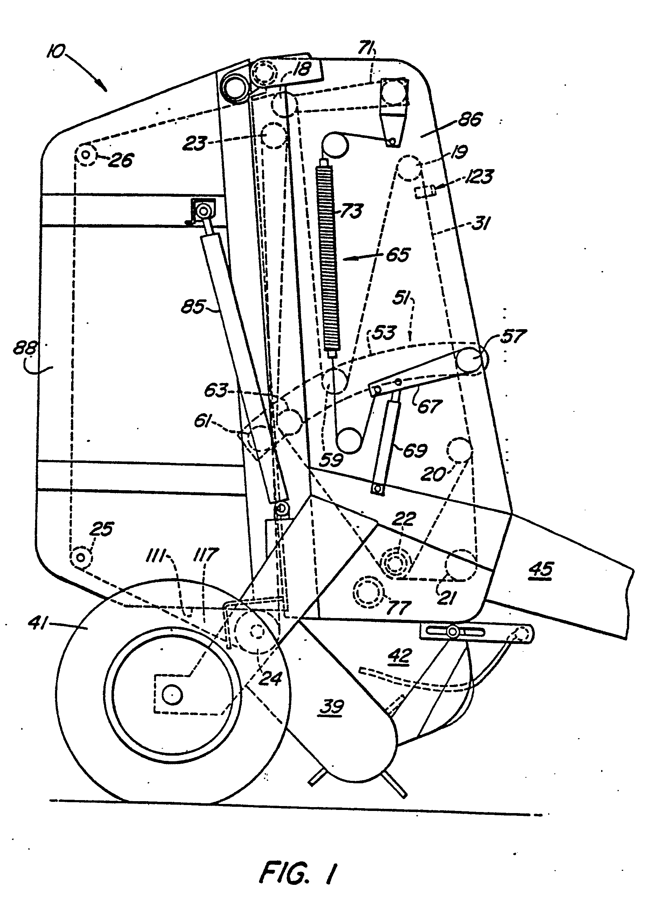

Die in Fig. 1 dargestellte Rundballenpresse weist einen Rahmen 10 mit einem Paar sich gegenüberliegender Seitenwände 13, 15, mehrere Walzen 18 bis 26, die drehbar an den Seitenwänden 13, 15 und sich zwischen diesen erstreckend montiert sind, eine Vielzahl endloser, nebeneinander gelegener Riemen 31 bis 38, die auf den Walzen 18 bis 26 aufliegen und zwischen den Seitenwänden 13, 15 einen ausdehnbaren Ballenpreßraum 40 zum Formen eines zylindrischen Ballens bilden, und einen Erntegutaufnehmer 39 zum Zuführen des Ernteguts vom Boden in den Ballenpreßraum 40 auf. Ein Paar Leitbleche 42 (nur ein einziges ist gezeigt) ist an den jeweiligen Enden des Erntegutaufnehmers 39 angebracht. Der Rahmen 10 der Rundballenpresse wird von Rädern 41 getragen (lediglich ein einziges ist dargestellt) und von einem nicht gezeigten Ackerschlepper über eine Zugdeichsel 45 gezogen.

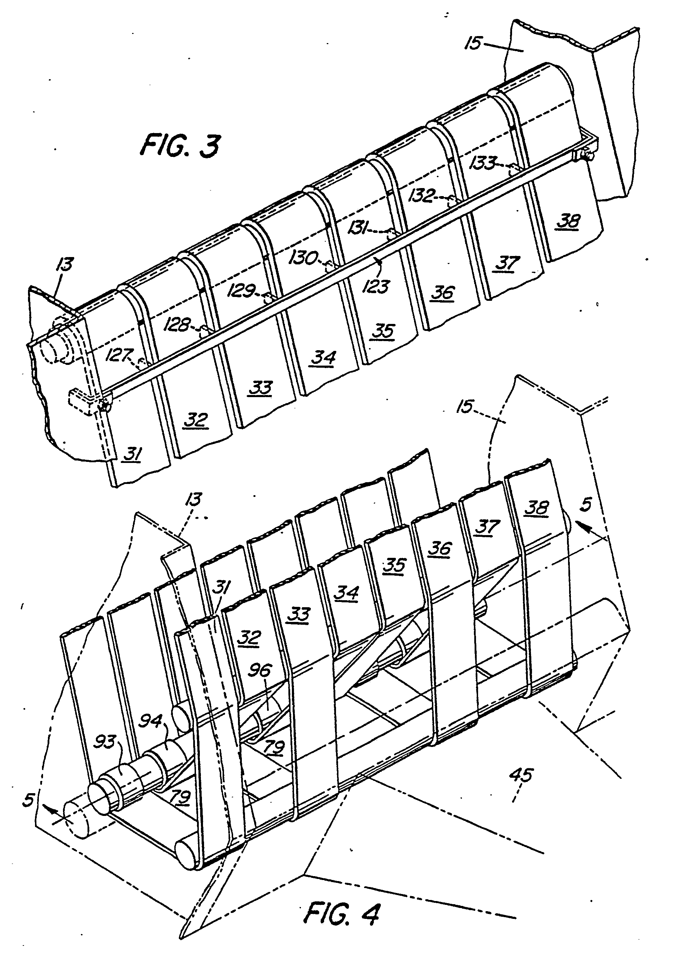

Die Riemen 31 bis 38 beinhalten ein Paar im wesentlichen emporgerichtete gegenüberliegende Teilstücke 47 und 49, die den Ballenpreßraum 40 bilden und sich zwischen einer Walze 61 und der Walze 24 bzw. zwischen einer Walze 63 und der Walze 22 erstrecken. Wie in Fig. 2 gezeigt, ist die Größe des Ballenpreßraumes 40 und die Länge der Teilstücke 47 und 49 durch eine Riemenspannvorrichtung 51 veränderbar, um sich dem beim Wickelvorgang sich vergrößernden Durchmesser des Ballens 50 anpassen zu können. Die Riemenspannvorrichtung 51 beinhaltet ein Paar Arme 53 und 55, die schwenkbar an einem Halter 57 befestigt sind, eine Riemenspannwalze 59, die zwischen den Armen 53 und 55 gehalten ist, und die beiden den Ballenpreßraum 40 begrenzenden Walzen 61 und 63, die zwischen den Armen 53 und 55 angeordnet sind. Die Riemenspannvorrichtung 51 ist auf jeder Seite der Rundballenpresse durch ein Paar Vorspannvorrichtungen 65 (nur eine ist in Fig. 1 gezeigt) vorgespannt, die jeweils einen Spannarm 67, der an dem einen Ende des Halters 57 befestigt ist, einen Hydraulikzylinder 69, einen Winkelhebel 71 und eine Feder 73, die zwischen dem Winkelhebel 71 und dem Spannarm 67 gelegen ist, aufweisen.

Aus Fig. 2 geht ferner hervor, daß das Erntegut durch einen offenen oder nicht eingeengten Einlaß 75 ohne nennenswerte Verdichtung von dem Erntegutaufnehmer 39 dem Ballenpreßraum 40 zuführbar ist. Der Einlaß 75 wird durch die untersten sich gegenüberliegenden, die Riemen führenden Walzen 24, 22, den Erntegutaufnehmer 39 und eine Abstreifwalze 77 begrenzt. Die Abstreifwalze 77 trägt zum anfänglichen Bilden des Ballenkerns bei, trägt teilweise das Gewicht des Ballens während seiner Bildung und streift Erntegut von dem Teilstück 49 ab, um den Verlust von Erntegut aus dem Ballenpreßraum 40 heraus zu verhindern bzw. zu vermindern.

Die Riemen 31 bis 38 werden durch einen herkömmlichen, die Walzen 19 und 22 antreibenden, nicht gezeigten Antrieb, der mit einer Zapfwelle des zum Ziehen der Presse benutzten Ackerschleppers (nicht gezeigt) verbunden ist, in Richtung der Pfeile 72 und 74 in Umlauf versetzt. Die Riemen 31 bis 38 sind, wie aus den Figuren 2 und 4 hervorgeht, abwechselnd um die Walze 20 oder die Walze 21 geführt, um Öffnungen oder Abstände 79 zu bilden, durch die Erntegut austreten kann, bevor es die Walzen umwickeln oder den Aufbau von eingeschlossenem Erntegut in zu dem Ballenpreßraum 40 benachbarten Räumen wie dem Raum 81 verursachen kann.

Aus Fig. 1 ist ferner ersichtlich, daß jede Seitenwand 13 und 15 aus Vorderteilen 86 und 87 und rückwärtigen Teilen 88 und 89 gebildet wird. Die rückwärtigen Teile 88 und 89 und die Walzen 24 bis 26 bilden ein Ballenentladegatter 82. Dieses ist zum Auswerfen des Ballens 50 aus dem Ballenpreßraum 40, wenn er die gewünschte Ballengröße erreicht hat, um einen Schwenkpunkt 83 durch die Betätigung zweier Hydraulikzylinder 85 (lediglich einer ist ersichtlich) relativ zu den Vorderteilen 86, 87 drehbeweglich.

Ein Riemenführungsteil 123 (Fig. 1 und 3) ist zwischen den Seitenwänden 13 und 15 fest eingebaut und enthält eine Vielzahl Führungsleisten 127 bis 133, die sich jeweils zwischen den sich benachbarten Riemen 31 bis 38 erstrecken, um zu einer einwandfreien Riemenausrichtung und zu einem einwandfreien Riemenlauf auf den Walzen 18 bis 26 beizutragen.

Im Einsatz wird der Ballen beim Ziehen der Rundballenpresse über das Feld gebildet, wobei das in der Regel in einem Schwad auf dem Boden liegende Erntegut von dem Erntegutaufnehmer 39 aufgenommen und ohne merkliche Verdichtung durch den offenen Einlaß 75 nach oben in den Ballenpreßraum 40 gegeben wird. Das Erntegut wird dann von dem sich nach oben bewegenden Teilstück 47 erfaßt und beginnt sich dort im Uhrzeigerdrehsinn zu drehen (Fig. 2). Diese Drehbewegung wird zumindest später von dem sich nach unten bewegenden Teilstück 49 unterstützt. Sobald das Erntegut den untersten Abschnitt des Teilstückes 49 erreicht, wird es von der im Gegenuhrzeigerdrehsinn rotierenden Abstreifwalze 77 ergriffen, die ebenfalls die Drehbewegung des Ernteguts im Uhrzeigerdrehsinn unterstützt, wobei weiteres, durch den Einlaß 75 in den Ballenpreßraum eingespeistes Erntegut zur Bildung eines Ballenkerns erfaßt wird. Da beim weiteren Zuführen von Erntegut der Ballenkern im Durchmesser wächst, wird er durch die gespannten Riemen verdichtet, wobei die Spannung, die den Riemen durch die Riemenspannvorrichtung 51 und die Vorspannvorrichtung 65 auferlegt ist, ansteigt und letztlich die Arme 53 und 55 mit der Riemenspannwalze 59 und den Walzen 61, 63 im Uhrzeigerdrehsinn verschwenkt werden. Mit der Aufwärtsbewegung der Riemenspannwalze 59 und der Walzen 61 und 63 werden die Teilstücke 47 und 49 in ihrer wirksamen Länge verlängert und der Durchmesser des Ballenpreßraumes 40 dadurch vergrößert. Mit ansteigendem Ballendurchmesser vergrößert sich der Ballenpreßraum 40 weiter entgegen der Wirkung der die Riemen spannenden Federn 73 und der Hydraulikzylinder 69. Die Spannung der Riemen kann zusätzlich durch den Austausch eines Druckmediums zwischen dem oberen und unteren Ende der hierzu doppelt wirkend ausgebildeten Hydraulikzylinder 69 über ein einstellbares Druckbegrenzungsventil (nicht gezeigt) auch reguliert werden, um die Ballendichte zu variieren. Wenn der Ballen 50 seinen vorbestimmten Durchmesser erreicht hat, werden die Hydraulikzylinder 85 zum Öffnen des Ballenentladegatters 82 und zum Ablegen des Ballens 50 auf den Boden betätigt.

Der Ballenpreßraum 40 weist Seiten auf, die im wesentlichen von den Riemen 31 bis 38 umschlossen werden. Hierbei sind die Riemen 31 bis 38 derart bemessen und voneinander entfernt, daß sie mindestens 80 % und vorzugsweise über 90 % des Bereichs zwischen den Seitenwänden 13 und 15 ab- bzw. bedecken. Die Abstände benachbarter Riemen und der außen liegenden Riemen 31 und 38 sind derart, daß lediglich ausreichend Raum für den Durchtritt der schmalen, leistenförmigen Führungsleisten, die zwischen aneinandergrenzenden Riemen und ggf. zwischen den außen liegenden Riemen 31 und 38 und den Seitenwänden 13, 15 anzuordnen sind, verbleibt. Die Führungsleisten helfen, einen einwandfreien Riemenlauf und eine einwandfreie Riemenausrichtung der Riemen auf den Walzen zu erhalten. Dadurch, daß der Ballenpreßraum im wesentlichen von den Riemen umfaßt wird, tritt erstens weniger Erntegut aus dem Ballenpreßraum aus, das sich sonst in dem Ballenpreßraum benachbarten Räumen ansammeln und dort zu Verstopfungen führen könnte, und wird zweitens erreicht, daß kleinere Abschnitte der Walzen dem Erntegut ausgesetzt sind, wodurch ein mögliches Aufwickeln von Erntegut auf den Walzen verringert wird.

Bei einem bevorzugten Ausführungsbeispiel mit sechs Riemen von je 17,8 cm Breite, einem Abstand zwischen den Riemen von 1,28 cm und einem Abstand der äußeren Riemen zu den Seitenwänden von jeweils 2,0 cm beträgt die Gesamtbreite zwischen den Seitenwänden 117 cm. Hierbei ist jede Führungsleiste 127 bis 133 0,5 cm stark. Mit Riemen dieser Größe und dem vorgegebenen Abstand zwischen den Seitenwänden werden ungefähr 91 % der Entfernung zwischen den Seitenwänden 13 und 15 überbrückt.

Bei einem weiteren bevorzugten Ausführungsbeispiel mit einem Abstand der Seitenwände zueinander von 156,5 cm, mit 8 Riemen von je 17,8 cm Breite, einem Abstand der Seitenwände 13, 15 zu den unmittelbar angrenzenden Riemen 31, 38 von 2,0 cm, einem Abstand jedes Riemens von dem unmittelbar angrenzenden Riemen von 1,45 cm und einer Stärke der Führungsleisten von 0,5 cm werden ungefähr 91 % der Entfernung zwischen den Seitenwänden durch die Riemen abgedeckt.

Bei einer derartigen Umfassung des Ballenpreßraumes bei der beschriebenen Rundballenpresse können Ballen aus verschiedensten Ernteprodukten (z. B. Heu, Stroh und anderem Halmoder Blattgut) bei fast jedem Feuchtigkeitsgehalt und unter weiteren Erntebedingungen bei einer verringerten Neigung zum Verstopfen oder Verklemmen des Ballenpreßraumes und zum Umwickeln der Walzen 18 bis 26 mit Erntegut gebildet werden.

Diese Ausbildung ermöglicht, daß Heu oder Gras mit einem Feuchtigkeitsgehalt von 10 % bis zu 70 % und 80 % gepreßt werden kann, so daß ungeschnittenes Gras, das einen Feuchtigkeitsgehalt zwischen 70 % und 80 % hat, unmittelbar nach dem Mähen preßbar ist. Dies hat sich z. B. in Gegenden wie Großbritannien als besonders zweckmäßig herausgestellt, in denen man Heu (z. B. Raygras) sofort nach dem Mähen preßt und den Ballen in einer Plastikhülle unterbringt, um Silage herzustellen. Mit den bisherigen Rundballenpressen war das Pressen von Heu bei Feuchtigkeitsgraden zwischen 25 % und 50 % gewöhnlich störungsbehaftet. Andererseits ist das Pressen von Heu und Stroh mit niedriger Feuchtigkeit mit herkömmlichen Rundballenpressen auch als äußerst schwierig erkannt worden, weil das Erntegut dann dazu neigt, in kleine Teile zu zerbrechen und sich in den dem Ballenpreßraum benachbarten Räumen anzusammeln. Mit der hier beschriebenen Rundballenpresse kann derartiges Erntegut mit einer bedeutend verringerten Neigung zum Verstopfen gepreßt werden.

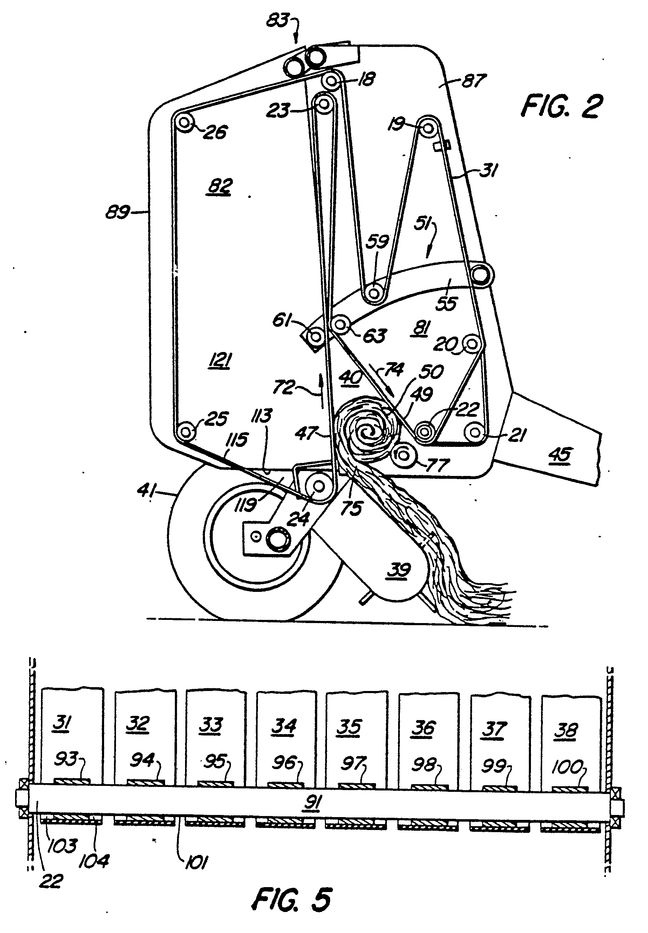

Es wird nunmehr auf die Fig. 2 und insbesondere auf die Figuren 4 und 5 Bezug genommen, die ein bevorzu gtes Ausführungsbeispiel einer Rundballenpresse mit einer selbstreinigenden, den Antrieb übertragenden Walze 22 veranschaulichen.

Die Walze 22 wird von einem zylindrischen Kern 91 (z. B. aus Stahl) und Mitteln, um die Längskanten der Riemen 31 bis 38 außer Berührung mit einer Mantelfläche 101 des Kerns 91 zu halten, gebildet. Diese Mittel können Gummibüchsen 93 bis 100 sein, die auf die Mantelfläche 101 des Kerns 91 aufgeklebt sind.

Es ist auch denkbar, daß die Stützmittel durch jede andere Art erhöhter Oberflächen zum Tragen des mittleren Abschnitts oder Teile davon jedes Riemens derart, daß die Riemenkanten normalerweise außer Berührung mit dem Kern gehalten werden, gebildet werden können. Der Kern könnte etwa mit erhöhten Oberflächen einstückig gegossen oder auf andere Art hergestellt werden. Die erhöhten Oberflächen unter jedem Riemen können durchgehend oder unterbrochen sein.

Jede Gummibüchse 93 bis 100 ist derart auf dem Kern 91 angeordnet, daß sie unter dem jeweils zugehörigen Riemen 31 bis 38 liegt. Die Breite der Riemen 31 bis 38 und die Breite der darunterliegenden Gummibüchsen 93 bis 100 ist aber derart gewählt, daß jeder Riemen sich seitlich über die darunterliegende Gummibüchse erstreckt und dadurch ein Paar Fugen 103, 105 bildet, die von der Mantelfläche 101 des Kerns 91, der Innenfläche des Riemens und der äußeren Kante der Gummibüchse umrissen werden. Beispielsweise sind in einer bevorzugten Ausbildungsform die Riemen 17,8 cm und die Gummibüchsen 12,7 cm breit, die eine Fuge in einer Länge von ungefähr 2,5 cm ergeben. Die Stärke der Gummibüchse beträgt 0,32 cm, woraus sich eine Fuge von weniger als 3,2 mm in der Höhe (zwischen der Mantelfläche 101 und der Innenfläche des Riemens) ergibt, weil der überhängende Teil der Riemen dazu neigt, sich auf die Mantelfläche 101 zuzubiegen. Die Stärke der Gummibüchsen 93 bis 100 sollte ausreichend sein, um eine Fuge entstehen zu lassen und um diese zu erhalten. Die Stärke ist den verschiedenen Riemenwerkstoffen anzupassen.

Dadurch, daß auf der Walze 22 Gummibüchsen unter jedem Riemen liegen, ergibt sich eine bedeutend geringere Neigung für das Erntegut, sich um die Walze 22 zu wickeln. Ohne die Gummibüchsen stützt sich der Ballen zumindest während eines Teils des Ballenbildungsvorgangs auf der Walze 22 ab und drückt das Teilstück 49 gegen diese, so daß das Erntegut, das zwischen den Riemen 31 bis 38 von dem Ballenpreßraum 40 aus hindurchgelangt, in der Klemmstelle zwischen dem Teilstück 49 und der Walze 22 eingezwängt werden kann. Durch die gewählte Ausbildung der Fugen wird die Bildung einer Klemmstelle ganz oder zumindest teilweise vermieden, so daß das Erntegut wesentlich weniger dazu neigt, unter den Kanten der Riemen eingeklemmt und festgehalten zu werden. Wenn noch einiges Erntegut zwischen den Riemen 31 bis 38 hindurchgelangen sollte, kann es durch die Öffnungen 79, die sich aus der versetzten Anordnung der Riemen 31 bis 38 auf den Walzen 21, 22 ergeben, herausfallen. Es kommt hinzu, daß durch die ausgeschaltete oder zumindest sehr verringerte Neigung der Enden des Ernteguts, unter den Kanten der Riemen festgehalten zu werden, das Erntegut weniger aus dem in dem Ballenpreßraum geformten Ballen herausgezogen oder abgeschält wird und somit Erntegutverluste verringert werden. Durch die Verringerung der Wickelneigung des Ernteguts um die Walze 22, was bei allen Ernteprodukten und Erntebedingungen zu geringem oder gar keinem Riemenbruch und gutem Riemenlauf führt, trägt dieses Merkmal außerdem wesentlich zu einer störungsfreien Pressenarbeit bei. Dies ist besonders vorteilhaft beim Pressen von Ernteprodukten, wie Hochfeuchtigkeitsheu oder extremem Niederfeuchtigkeitsheu oder Stroh, bei dem eine große Neigung des Ernteprodukts besteht, sich um die Walzen anzusammeln und evtl. die Riemen zu verstopfen oder festzuhalten. Selbstverständlich können auch andere Walzen (z. B. Walze 61) als die Walze 22, die mit Ernteprodukten in Berührung kommen, mit Abstandsmitteln für die Riemenkanten ausgestattet werden.

In den Figuren 1 und 2 ist außerdem eine vorteilhafte Ausbildung der Rundballenpresse mit einem selbstreinigenden Ballenentladegatter 82 gezeigt. Dieses wird von den rückwärtigen Teilen 88 und 89 der Seitenwände 13 und 15 und den Walzen 24 bis 26 gebildet.

Die Walzen 24 und 25 sind in der Nähe der unteren Kanten 111 und 113 der rückwärtigen Teile 88 und 89 angebracht. Hierbei ist die Walze 24 unterhalb der unteren Kanten 111 und 113 am Rahmen 10 und die Walze 25 im Bereich des rückwärtigen unteren Endes der rückwärtigen Teile 88 und 89 angeordnet. Ein Teilstück 115 der Riemen 31 bis 38, das sich zwischen den Walzen 24 und 25 erstreckt, verläuft dann teilweise unter den unteren Kanten 111, 113 und bildet Öffnungen 117, 119 auf jeder Seite der Rundballenpresse. Diese führen in einen Raum 121, der von den Riementeilstücken, die sich um die Walzen 23 bis 26 erstrecken, und den rückwärtigen Teilen 88, 89 umschlossen wird. Während des Ballenbildungsvorgangs können Teile des Erntegutes u. U. aus dem Ballenpreßraum 40 in den Raum 121 gelangen, wenn es zwischen benachbarten Riemen 31 bis 38 hindurchfällt. Wäre keine Entnahme- oder Austrittsmöglichkeit gegeben, so würde das dort sich ansammelnde Erntegut in dem Raum 121 sich um die Walzen wickeln, was zu Riemenschäden führen kann, und letztlich diesen Raum verstopfen. Die besondere Anordnung der Öffnungen 117 und 119 bewirkt, daß das evtl. in den Raum 121 gelangende Erntegut während des Betriebes durch die Riemenbewegung einschließlich der Riemenschwingungen zu den Seiten bewegt wird und dort von selbst herausfällt. Etwaiges, noch in dem Raum verbleibendes Restgut wird in keinem Falle die Arbeitsleistung der Rundballenpresse beeinträchtigen. Die Öffnungen 117 und 119 sind dabei so vorgesehen, daß sie sich mit seitlichem Abstand neben den Rädern 41 befinden, so daß eine Unfallgefahr durch die umlaufenden Riemen ganz oder zumindest weitgehend ausgeschaltet ist. Bei bestimmten Rundballenpressenausbildungen kann es aber auch zweckmäßig sein, die Öffnungen an anderen, auch einen manuellen Zugang ermöglichenden Stellen vorzusehen.

## Patentansprüche

1. Rundballenpresse mit einem einen Guteinlaß (75) aufweisenden Ballenpreßraum (40) und einem dem Ballenpreßraum (40) benachbarten Raum (121), wobei beide Räume (40, 121) aus umlaufenden, über Walzen (18 bis 26) geführten, sich bis in den Bereich von Seitenwänden (13, 15) erstreckenden endlosen Riemen (31 bis 38) gebildet werden, dadurch gekennzeichnet, daß der benachbarte Raum (121) mit Bezug auf die Fahrtrichtung mindestens eine zum selbsttätigen Austreten des Erntegutes seitliche Öffnung (117, 119) aufweist.

2. Rundballenpresse nach Anspruch 1, dadurch gekennzeichnet, daß die Öffnung (117, 119) groß genug zum selbständigen Austreten des Erntegutes, aber kleiner ist als zum Einstieg einer Person erforderlich.

3. Rundballenpresse nach Anspruch 1 oder 2, dadurch gekennzeichnet, daß mindestens eine der dem weiteren Raum (121) zugeordneten Walzen (24) derart angeordnet ist, daß sie sich mindestens teilweise außerhalb des von den Seitenwänden (13, 15) umschlossenen Raumes befindet.

4. Rundballenpresse nach Anspruch 3, dadurch gekennzeichnet, daß die dem weiteren Raum (121) zugehörige Walze (24) mit Bezug auf die Bodenoberfläche die am tiefsten gelegene Walze (24) ist.

5. Rundballenpresse nach einem oder mehreren der vorherigen·Ansprüche mit mehreren seitlich und außerhalb von den Seitenwänden (13, 15) angeordneten Laufrädern (41) dadurch gekennzeichnet, daß die Laufräder (41) mit Abstand und seitlich von den Öffnungen (117 und 119) vorgesehen sind.

6. Rundballenpresse nach einem oder mehreren der vorherigen Ansprüche, dadurch gekennzeichnet, daß die Riemen (31 bis 38) den Abstand zwischen den Seitenwänden (13, 15) zu 80 % bis 90% oder mehr bedecken und teilweise außerhalb der Seitenwände (13, 15) verlaufend angeordnet sind.

7. Rundballenpresse nach Anspruch 3, mit vertikal schwenkbar angeordneten, rückwärtigen Teilen (88, 89), dadurch gekennzeichnet, daß sich die dem weiteren Raum (121) zugehörige Walze (24, 25, 26) zwischen den rückwärtigen Teilen (88, 89) erstreckt.

8. Rundballenpresse nach Anspruch 3, mit an vorderen und rückwärtigen unteren Kanten (113, 115) der rückwärtigen Teile (88, 89) angeordneten Walzen (24, 25), dadurch gekennzeichnet, daß die dem weiteren Raum (121) zugehörige Walze (24) nahe der vorderen unteren Kante (113 und 115) der rückwärtigen Teile (88, 89) vorgesehen ist.

9. Rundballenpresse nach einem oder mehreren der vorherigen Ansprüche, dadurch gekennzeichnet, daß eine weitere dem benachbarten Raum (121) zugehörige Walze (25) nahe der rückwärtigen unteren Kante (113, 115) der rückwärtigen Teile (88 und 89) vorgesehen ist.

10. Rundballenpresse nach einem oder mehreren der vorherigen Ansprüche, mit rückwärtigen und vorderen Riementeilstükken (47, 49), zwischen denen ein Ballen gebildet wird, dadurch gekennzeichnet, daß die der vorderen unteren Kante (113, 115) der rückwärtigen Teile (88, 89) naheliegende dem weiteren Raum (121) zugeordnete Walze (24) das untere Ende des rückwärtigen Riementeilstücks (47) bildet.

### Claims

1. A round baler comprising a baling chamber (40) having a material inlet (75), and a chamb (121) adjacent to the baling chamber (40), wherein both chambers (40, 121) are formed from circulating endless belts (31 to 38) which are guided over rollers (18 to 26) and which extend into the region of side walls (13, 15), characterised in that the adjacent chamber (121), in relation to the direction of travel, has at least one lateral opening (117, 119) for automatic discharge of the crop material.

2. A round taler according to claim 1 characterised in that the opening (117, 119) is large enough for independent discharge of the crop material but smaller than is necessary for a person to climb in.

3. A round baler according to claim 1 or claim 2 characterised in that at least one of the rollers (24) associated with the further chamber (121) is so arranged that it is disposed at least partially outside the chamber enclosed by the side walls (13, 15).

4. A round baler according to claim 3 characterised in that the roller (24) associated with the further chamber (121) is the roller (24) which is disposed at the lowest position, with respect to the ground surface.

5. A round baler according to one or more of the preceding claims comprising a plurality of support wheels (41) which are arranged laterally and outwardly of the side walls (13, 15), characterised in that the support wheels (4I) are provided at a spacing from and laterally of the openings (117 and 119).

6. A round baler according to one or more of the preceding claims characterised in that the belts (31 to 38) cover 80 to 90% or more of the spacing between the side walls (13, 15) and are arranged to extend partially outside the side walls (13, 15).

7. A round baler according to claim 3 comprising rearward portions (88, 89) which are arranged for vertical pivotal movement characterised in that the roller (24, 25, 26) associated with the further chamber (121) extends between the rearward portions (88, 89).

8. A round baler according to claim 3 ccmprising rollers (24, 25) arranged at foiward and rearward lower edges (113, 115) of the rearward portions (88, 89), characterised in that the roller (24) associated with the further chamber (121) is provided adjacent the forward lower edge (113 and 115) of the rearward portions (88, 89).

9. A round baler according to one or more of the preceding claims characterised in that a further roller (25) which is associated with the adjacent chamber (121) is provided adjacent the rearward lower edge (113, 115) of the rearward portions (88, and 89).

10. A round baler according to one or more of the preceding claims, comprising rearward and forward belt portions (47, 49) between which a bale is formed, characterised in that the roller (24)' which is associated with the further chamber (121) and which is adjacent the forward lower edge (113, 115) of the rearward portions (88, 89) forms the lower end of the rearward belt portion (47).

### Revendications

1.- Presse à balles cylindriques ou rondes comportant une chambre (40) de formation des balles présentant un orifice (75) d'entrée des produits et une chambre (121) voisine de la chambre (40) de formation des balles, ces deux chambres (40, 121) étant formées par des bandes ou courroies sans fin (31 à 38) animées d'un mouvement de circulation, guidées sur des rouleaux ou cylindres (18 à 26) et s'étendant jusqu'au voisinage de parois latérales (13, 15) caractérisée en ce que la chambre voisine (121) comporté, si l'on considère le sens de la marche, au moins un orifice latéral (117, 119) pour la sortie automatique des produits de récolte.

2.- Presse à balles rondes suivant la revendication 1, caractérisée en ce que l'orifice (117, 119) est suffisamment grand pour permettre une sortie automatique des produits de récolte, mais est plus petit que celui nécessaire à la pénétration d'une personne.

3.- Presse à balles rondes suivant la revendication 1 ou 2, caractérisée en ce qu'au moins un rouleau (24) conjugué à l'autre chambre (121) est disposé de telle sorte qu'il se trouve au moins en partie à l'extérieur de l'espace entouré par les parois latérales (13, 15).

4.- Presse à balles rondes suivant la revendication 3, caractérisée en ce que le rouleau (24) conjugué à l'autre chambre (121) est le rouleau (24) situé le plus bas par rapport à la surface du sol.

5.- Presse à balles rondes suivant une ou plusieurs des revendications précédentes, comportant plusieurs roues porteuses (41) disposées latéralement et à l'extérieur des parois latérales (13, 15), caractérisée en ce que les roues porteuses (41) sont prévues latéralement à une certaine distance des orifices (117 et 119).

6.- Presse à balles rondes suivant une ou plusieurs des revendications précédentes, caractérisée en ce que les bandes ou courroies (31 à 38) couvrent à 80 % jusqu'à 90 % ou plus la distance séparant les parois latérales (13, 15) et s'étendent partiellement à l'extérieur des parois latérales (13, 15).

7.- Presse à balles rondes suivant la revendication 3, comportant des parties arrière (88, 89) disposées de façon à pouvoir pivoter verticalement, caractérisée en ce que le rouleau (24, 25, 26) conjugué à l'autre chambre (121) s'étend entre les parties arrière (88, 89).

8.- Presse à balles rondes suivant la revendication 3, comportant des rouleaux (24, 25) disposés sur les bords inférieurs avant et arrière (113, 115) des parties arrière (88, 89), caractérisée en ce que le rouleau (24) conjugué à l'autre chambre (121) est prévu au voisinage du bord inférieur avant (113 et 115) des parties arrière (88, 89).

9.- Presse à balles rondes suivant une ou plusieurs des revendications précédentes, caractérisée en ce qu'il est prévu un autre rouleau (25) associé à la chambre voisine (121), au voisinage du bord inférieur arrière (113, 115) des parties arrière (88, 89).

10.- Presse à balles rondes suivant une ou plusieurs des revendications précédentes, comportant des brins de courroies arrière et avant (47, 49) entre lesquels une balle est formée, caractérisée en ce que le rouleau (24) conjugué à l'autre chambre (121) et voisin du bord inférieur avant (113, 115) des parties arrière (88, 89) forme l'extrémité inférieure du brin de bande ou courroie arrière (47).

0 095 688

FIG. I

1

FIG. 3

FIG. 4

0 095 688

FIG. 2

FIG. 5

5